# EUROPEAN PATENT SPECIFICATION

(11) **EP 2 144 459 B1**
(45) Date of publication and mention of the grant of the patent: **11.07.2012**
(21) Application number: 09164100.1
(22) Date of filing: 30.06.2009
(51) Int. Cl.: H04W 8/04, H04W 4/16, H04M 3/46, H04M 3/42

(54) **Method and network device for implementing communication service**
Verfahren und Netzwerkvorrichtung zur Umsetzung eines Kommunikationsdienstes
Procédé et dispositif de réseau pour mettre en oeuvre un service de communication

(30) Priority: 11.07.2008 CN 200810133535
(43) Date of publication of application: 13.01.2010
(73) Proprietor: Huawei Technologies Co., Ltd., Longgang District, Shenzhen Guangdong 518129 (CN)
(72) Inventor: Zhang, Biao, 518129, Shenzhen (CN); Zou, Ye, 518129, Shenzhen (CN); Li, Yang, 518129, Shenzhen (CN); Xie, Xingcan, 518129, Shenzhen (CN); Zhan, Yongqiang, 518129, Shenzhen (CN)
(74) Representative: Körber, Martin Hans

(56) References cited:
- EP-A- 1 898 658
- US-A- 5 953 673
- US-A1- 2002 128 004
- US-B1- 6 529 735
- US-B1- 6 600 923

## Description

### Field of the Invention

The present invention relates to a communication filed, in particular, to a method and a network device for implementing communication service.

### Background of the Invention

With the development of the communication service, the operators provide more and more communication services to the users. The service of one number corresponding to multiple terminals is one of them. The service of one number corresponding to multiple terminals means that the multiple terminals have a same Mobile Station international ISDN number (MSISDN), but have different International Mobile Subscriber Identities (IMSIs). There are two modes for implementing the service of one number corresponding to multiple terminals: Mobile Access Hunting (MAH) and Flexible Alerting (FA).The method according to the MAH includes: when the user calls the MSISDN, the network will access the multiple terminals according to the predefined order; if a terminal accessed is unavailable, the network will access a next terminal until one of the multiple terminals answers the call. The method according to the FA includes: when the user calls the MSISDN, the network will access all the multiple terminals at the same time, and if one of the multiple terminals answers the calls, the other terminals will be prevented from accessing.

At present, the service of one number corresponding to multiple terminals includes call service and short message service. The conventional method for implementing the call service based on the service of one number corresponding to multiple terminals is on the basis of the cooperation between Home Location Register (HLR) and Mobile Services switching Center (MSC). According to this method, each terminal is assigned with one call sequence number. When a calling party calls a called party, the MSC requests roaming number of the called party from the HLR according to the MSISDN of the called party, the HLR judges that the called party has subscribed the service of one number corresponding to multiple terminals according to the subscribed information of the called party, and the HLR returns to the MSC all the call sequence numbers of the multiple terminals, the MSISDN, and roaming numbers, and the MSC connects the multiple terminals at the same time according to the roaming numbers, or the MSC connects the multiple terminals in proper sequence based on the call sequence numbers and the roaming numbers.

The conventional method for implementing the short message service based on the service of one number corresponding to multiple terminals includes: predefining one of the multiple terminals as the short message receiver, after the HLR receives the request for the short message routing information, the HLR sends the predefined terminal routing information to the Short Message Center (SMC), and the SMC forwards the short message to the predefined terminal based on the routing information.

In the process of researches and practices, the inventors of the present invention discover the following problems in the conventional method:

For the call service based on the service of one number corresponding to multiple terminals, the HLR must return all the MSISDN and the call sequence numbers, which would waste network resources and connection time. For the short message service based on the service of one number corresponding to multiple terminals, if the predefined terminal is unavailable, e.g., switching off, the sending of the short message will fail, and other terminals could not receive this short message. Therefore, the conventional method for implementing the service of one number corresponding to multiple terminals needs improving.
Document D1=US 6529735 B1, relates to a method of implementing a communication service for establishing communication between an originating party and a terminating party where the terminating party is selected in dependence of the geographical positions of the originating party and a set of mobile communication units.

### Summary of the Invention

The embodiments of the present invention are directed to a method and a network device for implementing the service of one number corresponding to multiple terminals, which solves the problem of network resource and connection time wasting in the conventional call service, and solves the problem of short message failure in the short message service in the prior art.

To achieve the aforementioned objective, the present invention adopts a technical solution as follows.

The method for implementing communication service is provided in an embodiment of the present invention, and the method includes:
receiving, by a Home Location Register, HLR, a service request from a Mobile Services switching Center, MSC; and
judging, by the HLR, that a target number carried in the service request belongs to service of one number corresponding to multiple terminals, initiating provide subscriber information paging, PSI paging toward all the multiple terminals or a part of the multiple terminals, selecting a certain number of terminals that have successfully replied to the PSI paging , and returning roaming numbers of the selected certain number of terminals to the MSC, wherein numbers of the certain number of terminals is greater than one but smaller than the total number of the multiple terminals; connecting, by the MSC, the certain number of terminals in turn in the Mobile Access Hunting, MAH, mode, or at the same time in the Flexible Alerting, FA, mode.

The network device for implementing communication service is provided in an embodiment of the present invention, and the network device includes:
a receiving unit, configured to receive a service request from a Mobile Services switching Center, MSC; and
a processing unit, configured to judge that a target number carried in the service request belongs to service of one number corresponding to multiple terminals, initiate provide subscriber information paging, PSI paging toward all the multiple terminals or a part of the multiple terminals, select a certain number of terminals that have successfully replied to the PSI paging , and returning roaming numbers of the selected certain number of terminals to the MSC, wherein numbers of the certain number of terminals is greater than one but smaller than the total number of the multiple terminals.

As can be seen from the forgoing technical solution, when a target number carried in the service request belongs to service of one number corresponding to multiple terminals, through selecting a certain number of terminals from the multiple terminals to implement continued service connection, the embodiments of the present invention provide an optimized processing for the service of one number corresponding to multiple terminals, and thus: for the call service, the optimized processing can improve the put-through rate of the call, and avoid network resource wasting and connection duration delay; for the short message service, the optimized processing enables the short messages to be sent successfully, and avoid the result that the short message cannot be sent successfully.

### Brief Description of the Drawings

Figure 1 is a flow chart of a method for implementing the communication service according to a first embodiment of the present invention;

Figure 2 is a flow chart of the method for implementing the communication service according to a second embodiment of the present invention;

Figure 3 is a flow chart of the method for implementing the communication service according to a third embodiment of the present invention;

Figure 4 is a flow chart of the method for implementing the communication service according to a forth embodiment of the present invention;

Figure 5 is a schematic diagram of the architecture of a network device according to an embodiment of the present invention.

Figure 6 is a schematic diagram of the architecture of a network device according to another embodiment of the present invention.

### Detailed Description of the Embodiments

The embodiments of the present invention provide a method and network device for implementing the communication service, so as to optimize the processing flow.

An embodiment of the present invention includes:
1) Receiving service request;
   The service request may include: a call routing request, a short message routing request, a location request, or an unstructured supplementary service data (USSD) request and so on.
2) When a target number corresponding to the service request belongs to the service of one number corresponding to multiple terminals, selecting a certain number of terminals from the multiple terminals to implement continued service connection.

The target number is carried in the service request, and refers to the number of a service receiver, for example, the target number carried in the call routing request is a called party number. The numbers of the certain number of terminals selected from the multiple terminals may be one, and may also be greater than one but smaller than the total number of the multiple subscribed terminals. The embodiments of the present invention are introduced as follows.

A first embodiment of the present invention takes the call service as example, where the call service is implemented through the MAH.

The service of one number corresponding to multiple terminals requires two or more terminals with same virtual number, in general, adopts the MSISDN, and the following embodiments take the MSISDN as the virtual number. Each terminal of the service of one number corresponding to multiple terminals has a different IMSI, and each IMSI has different authentication data. When the multiple terminals subscribed to the service of one number corresponding to multiple terminals, each one of the multiple subscribed terminals has been assigned with a call sequence number, and the call sequence numbers possessed by every subscribed terminal have been stored as subscription information in the HLR. The call sequence numbers may be used to identify the different subscribed terminals, where different subscribed terminals have different call sequence numbers, and the call sequence numbers can be further used to represent the priority of the subscribed terminals, for example, in MAH mode, the subscribed terminals with higher priorities would be connected by preference, the subscribed terminals with lower priorities are connected only in the situation that the subscribed terminals with higher priorities are not reached or answered over a period of time. The call sequence numbers also can be used in other service.

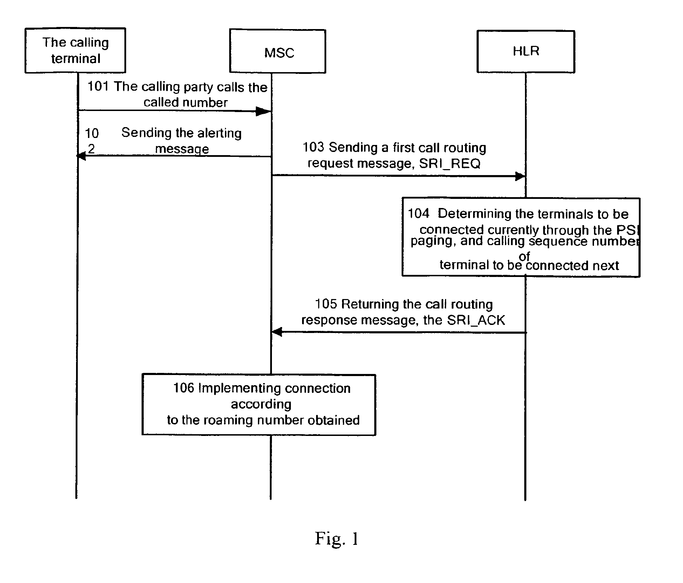

Figure 1 is a flow chart of a method for implementing the communication service according to a first embodiment of the present invention, and the method includes:

Step101: A calling terminal initials a call request carried a number of a called party, where the called party have subscribed to the service of one number corresponding to multiple terminals.

The number of the called party is the MSISDN subscribed by the user.

Step102: An MSC having received the call request sends alerting message to the calling terminal.

In the MAH mode, as multiple subscribed terminals of the service of one number corresponding to multiple terminals need to be connected, the calling terminal would be released after a timeout. In this embodiment, the MSC sends an alerting message to the calling terminal when judging that the number of the called party belongs to the service of one number corresponding to multiple terminals, where the alerting message is used to avoid the release of the calling terminal after the timeout.

Step103: The MSC sends a first call routing request, a first SRI_REQ, to an HLR.

The call routing request is used to apply for roaming number of the called party, and carries the MSISDN.

Step104: When judging that the MSISDN of the called party belongs to the service of one number corresponding to multiple terminals according to the subscription information, the HLR may determine which subscribed terminals would be connected in the first process through a provide subscriber information (PSI) paging process, and determine a call sequence number of a terminal to be connected in a second process.

In the embodiment of the present invention, if the MSC sends the call routing request to the HLR, the HLR should return a response carrying at least one terminal roaming number, then the MSC continues the next connection according to the roaming number; if the connection fails, the MSC may resend another call routing request to the HLR and the process will be repeated. In the embodiments of the present invention, this process is referred to as the first process, the second process, and so on.

The HLR receives the first call routing request from the MSC, and judges the MSISDN of the called party belongs to the service of one number corresponding to multiple terminals according to the subscription information; the HLR may initiate the PSI paging to one or more terminals for obtaining the state of one or more terminals, the HLR would judge that the terminal corresponding to the successful paging is in the Idle state, i.e., the Reachable state. For example, the HLR may initiate one PSI paging at a time, the HLR may determine a terminal to be connected first according to the call sequence number, and then initiate a PSI paging to this terminal for obtaining the state of this terminal. If the HLR judges that the PSI paging to this terminal fails, the HLR initiates another PSI paging to another terminal, where the call sequence number of said another terminal is next to the call sequence number of the terminal connected first. When the HLR judges that a PSI paging is successful, the HLR determines that the terminal corresponding to this successful PSI paging is to be connected in the current process, i.e., the first process; furthermore, the HLR may determine still another terminal to be connected in a next process, i.e., the second process, where the call sequence number of said still another terminal is next to the call sequence number of the terminal to be connected in the first process. The terminal to be connected in the first process is referred to as a first terminal, and the terminal to be connected in the second process is referred to as a second terminal.

It should be noted that, the HLR may determine, according to a paging switch, whether the PSI paging should be initiated. When the paging switch is On, the HLR initiates the PSI paging. The paging switch may switch on or switch off based on the information of the user or the network traffic or speed, if the network traffic is low or speed is slow, the paging switch may switch off. The PSI paging can be initiated by the HLR, or the HLR may notify another network element to initiate the PSI paging, and in general, the HLR may notify the MSC to initiate the PSI paging to the terminals. Moreover, after sending the SRI_REQ to the HLR, the MSC may start a waiting timer, so the HLR may further control the number of times of the PSI paging for avoiding the release of the MSC after the waiting timer times out.

Step105: The HLR returns a first call routing response message, a first SRI_ACK, to the MSC.

The first call routing response message, the first SRI_ACK, carries the roaming number of the first terminals to be connected in the first process and the call sequence number of the second terminal to be connected in the second process.

Step106: The MSC implements connection to the first terminals to be connected in the first process according to the roaming number.

The MSC receives the first call routing response message from the HLR, and connects to the first terminals corresponding to the roaming number.

If the MSC cannot connect the terminals to be connected in the first process corresponding to the roaming number, the MSC sends a second call routing request for the roaming number of the second terminal to be connected in the second process, in other words, the MSC sends the second SRI_REQ to the HLR again, where the second SRI_REQ carries the MSISDN and the call sequence number of the second terminal to be connected in the second process, and then the HLR returns the roaming number of the second terminal to be connected in the second process and a call sequence number of a third terminal which is different from the first two terminals, where the call sequence number of the third terminal is next to the call sequence number of the second terminal, and the MAH flow will be repeated in a similarly way successively.

It should be noted that, the PSI paging in the foregoing step104 may also be performed toward all or a part of the terminals. After obtaining the states of these terminals, the HLR returns roaming numbers and the call sequence number after the HLR makes some selection according to the idle states of these terminals, and the MSC may connect these terminals in turn in the MAH mode, or the MSC may connect these terminals at the same time in the FA mode.

On the other hand, when the HLR returns the first SRI_ACK to the MSC in step 105, the call sequence number of the second terminals to be connected in the second process is optional in the first SRI_ACK, the HLR may record this call sequence number of the first terminals to be connected in the first process locally; when the HLR receives the call routing request carrying the MSISDN again, the HLR may select another call sequence number except for the call sequence number of the first terminals to be connected in the first process and determine the second terminal to be connected in the second process.

According to the forgoing embodiment of the present invention, when the HLR judges that the MSISDN of the called party belongs to the service of one number corresponding to multiple terminals, the HLR does not return the MSISDN or the call sequence numbers of all the subscribed terminals, but initiates the PSI paging and returns related information of one or more terminals corresponding to successful PSI paging to the MSC, where the terminals have successfully replied to the PSI paging. When the HLR obtains the idle state of one terminal through the PSI paging, the HLR returns the roaming number of this terminal or the call sequence number of the terminal to be connected in the next process; when the HLR obtains the state of multiple terminals through the PSI paging, the HLR returns the roaming number and the call sequence number of the certain number of terminals. The method according to the embodiments of the present invention may improve the put-through rate of the call, and avoid network resource wasting and connection duration delay in connecting some unreachable or switch-off terminals in the prior art.

The foregoing method for obtaining the terminal state through the PSI paging is not only applicable to the call service, but also to other services, like the short message service, location service, and Unstructured Supplementary Service Data service direct dialing service. The other services will be introduced as follows.

The following embodiment takes the short message service as an example.

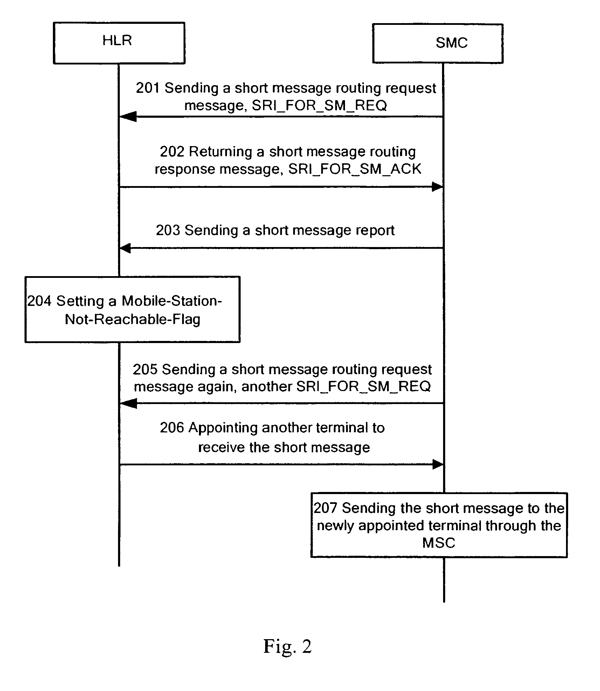

Figure 2 is a flow chart of a method for implementing the short message service according to a second embodiment of the present invention, and the method includes the following steps.

Step 201: An HLR receives a first short message routing request, i.e., an first SRI_FOR_SM_REQ, from a Short Message Center (SMC);

After the SMC receives a short message carrying an MSISDN of a short message receiver from a short message sender, the SMC sends the first SRI_FOR_SM_REQ to the HLR for obtaining routing information, where the first SRI_FOR_SM_REQ carries the MSISDN.

Step202: When the HLR judges that the MSISDN of the short message receiver belongs to the service of one number corresponding to multiple terminals according to the subscription information, the HLR returns a first short message routing response to the SMC;

After the HLR receives the first short message routing request, the HLR judges that the MSISDN of the short message receiver belongs to the service of one number corresponding to multiple terminals, the HLR sends routing information of a predefined terminal to the SMC through the first short message routing response, i.e., the first SRI_FOR_SM_ACK, where the predefined terminal has been predefined as a short message receiving terminal. The first SRI_FOR_SM_ACK also carries IMSI and a call sequence number of the predefined terminal. Besides, the HLR may send the call sequence number of the multiple terminals to the MSC during the location update process.

Step203: The HLR receives short message report from the SMC; and if the short message is forwarded unsuccessfully, the process proceeds to step204; otherwise, the flow ends.

The SMC receives the first SRI_FOR_SM_ACK from the HLR, forwards the short message to the predefined terminal corresponding to the IMSI or the call sequence number of the predefined terminal through an MSC. When the MSC forwards the short message, if the forwarding fails because the terminal is unreachable or being turn off, the MSC stores the short message, and retransmits the short message to the predefined terminal within a predefined period, such as two days; if the predefined terminal change its state to Startup during the predefined period, the predefined terminal can receive the short message; if the terminal keeps turning off in a long time beyond the predefined period, the predefined terminal cannot receive the short message, and the MSC may return a short message failing report, where the short message failing report is for notifying the SMC that the short message is not forwarded successfully. The SMC forwards the short message report to the HLR.

Step204: After the HLR receives the short message failing report from the SMC, the HLR sets a Mobile-Station-Not-Reachable-Flag on the predefined terminal.

When the Mobile-Station-Not-Reachable-Flag is valid, the HLR monitors the state of the predefined terminal, and if the predefined terminal is turned on, the HLR modifies the Flag to be invalid.

Step205: The HLR receives a first short message routing request, namely the second SRI_FOR_SM_REQ, from the SMC again.

Step206: The HLR appoints a second terminal to receive the short message, returns the second short message routing response carrying routing information of the newly appointed terminal to the SMC.

The HLR receives the second short message routing request from the SMC again, if the predefined terminal is still switch off. In other words, the HLR judges whether the state of the Mobile-Station-Not-Reachable-Flag is unchanged, and if the Mobile-Station-Not-Reachable-Flag is still valid, the HLR appoints the second terminal receiving the short message, and returns the second short message routing response to the SMC, which carries the routing information, the IMSI and/or the call sequence number of the newly appointed terminal.

Before the HLR appoints the newly appointed terminal receiving the short message, the HLR may obtain states of the related terminals through one or more PSI paging, the HLR selects one or more reachable terminals as newly appointed terminals receiving the short message.

Step207: After receiving the second short message routing response, the SMC sends the short message to the newly appointed terminal through the MSC.

If the HLR judges that the predefined terminal is reachable, such as turning on, the HLR may notify the SMC to send a short message to the predefined terminal in the subsequent process.

When receiving the short message report from the SMC first, and acquiring that the predefined terminal is not available for receiving the short message, the HLR may define another terminal to receive the short message directly and notify the SMC.

As can be seen, according to the embodiment of the present invention, when the predefined terminal is not available for receiving the short message, the short message can be sent to another terminal that is reachable, and the problems, for example, the short message cannot be sent successfully when the only predefined terminal is unreachable, can be addressed.

The following embodiment takes the location service as an example.

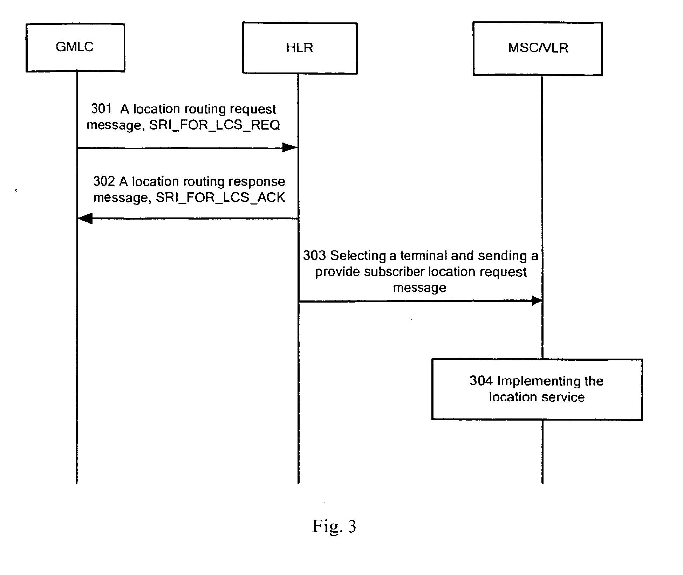

Figure 3 is a flow chart of a method for implementing the location service according to a third embodiment of the present invention, and the method includes the following steps:

Step301: An HLR receives a location routing request, i.e., a SRI_FOR_LCS_REQ from a Gateway Mobile Location Centre (GMLC);

The GMLC sends the SRI_FOR_LCS_REQ to the HLR, where the SRI_FOR_LCS_REQ carries the MSISDN, and the SRI_FOR_LCS_REQ requests for the location information of the terminal corresponding to the MSISDN.

Step302: The HLR returns a location routing response message, i.e., a SRI_FOR_LCS_ACK, to the GMLC.

Step303: When the HLR judges that the MSISDN of the location service belongs to the service of one number corresponding to multiple terminals according to the subscription information, the HLR selects terminal, and sends a subscriber location request to an MSC/VLR (Visited Location Register) to which the selected terminal belongs.

The HLR may select a terminal having higher priority as the objective of the location service according to the call sequence number. Before the HLR selects the terminal to be located, the HLR may obtain states of the related terminals through one or more PSI paging. The subscriber location request may carry the MSISDN and IMSI, or the MSISDN and the call sequence number, or the IMSI, or the MSISDN.

If the subscriber location request carries the MSISDN and IMSI, or the IMSI, the HLR selects the terminal corresponding to the IMSI; if the subscriber location request carries the MSISDN and the call sequence number, the HLR selects the terminal corresponding to the call sequence number, the HLR needs to send the call sequence number of all the terminals to the MSC/VLR in the location update process; if the subscriber location request carries the MSISDN only, in the case that the HLR holds the relationship between all the terminal and the MSC/VLR, when only one terminal belongs to the MSC/VLR for the multiple subscribed terminals, the HLR has only one choice, and sends the subscriber location request carrying the MSISDN only.

Step304: The MSC/VLR implements the location service to the selected terminal.

The MSC/VLR obtains which terminal would be located according to the subscriber location request, and implements the location service based on the conventional location method.

As can be seen, the embodiment of the present invention provides a collaboration method which combines the service of one number corresponding to multiple terminals and the location service, and thus this method enriches content of the service of one number corresponding to multiple terminals, and promotes improvement of the service of one number corresponding to multiple terminals.

The following embodiment takes the USSD service as an example.

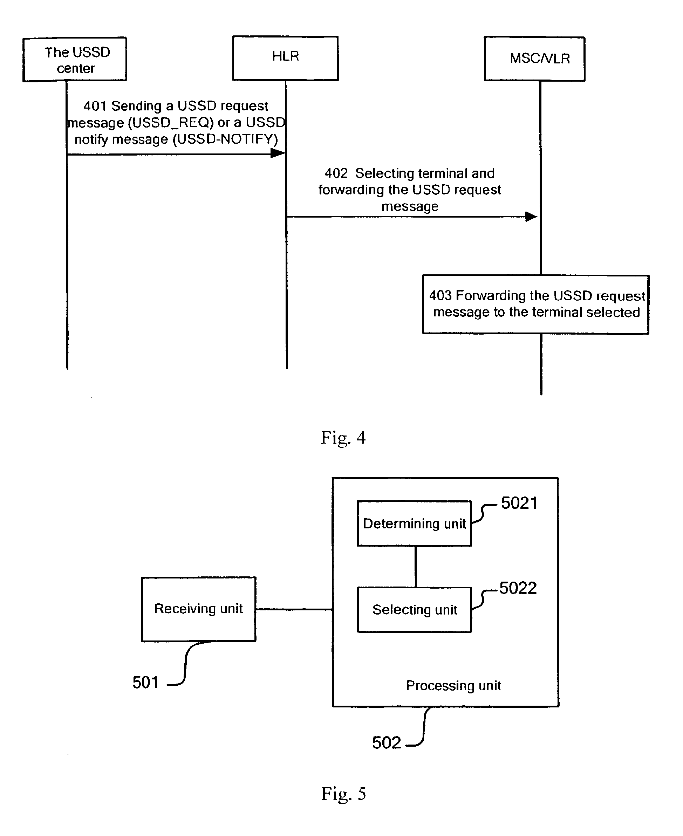

Figure 4 is a flow chart of a method for implementing the USSD service according to a fourth embodiment of the present invention, and the method includes the following steps:

Step401: The HLR receives a USSD request (USSD_REQ) or a USSD notify message (USSD-NOTIFY) from the USSD center.

The USSD center sends the USSD_REQ or the USSD-NOTIFY to the HLR, where the USSD_REQ or the USSD-NOTIFY carries the MSISDN.

Step402: When the HLR judges that the MSISDN of the USSD service belongs to the service of one number corresponding to multiple terminals according to the subscription information, the HLR selects a terminal, and forwards the USSD request to an MSC/VLR (Visited Location Register) to which the selected terminal belongs.

The HLR may select a terminal having high priority as the objective of the USSD service according to the call sequence number. Before selecting the terminal, the HLR may obtain states of the related terminals through one or more PSI paging.

The USSD request may carry the MSISDN and IMSI, or the MSISDN and the call sequence number, or the IMSI, or the MSISDN.

If the USSD request carries the MSISDN and IMSI, or the IMSI, the HLR selects the terminal corresponding to the IMSI; if the USSD request carries the MSISDN and the call sequence number, the HLR selects the terminal corresponding to the call sequence number, the HLR needs to send the call sequence number of all the terminals to the MSC/VLR in the location update process; if the USSD request carries the MSISDN only, in the case that the HLR holds the relationship between all the terminals and the MSC/VLR, when only one terminal belongs to the MSC/VLR for the multiple subscribed terminals, the HLR has only one choice, and sends the USSD request carrying the MSISDN only.

Step403: The MSC/VLR forwards the USSD request to the selected terminal.

The MSC/VLR obtains the receiving terminal of the USSD request according to the USSD request, and forwards the USSD request to the selected terminal.

It should be clarified that, the HLR may also initiate the USSD request.

As can be seen, the embodiment of the present invention provides a collaboration method which combines the service of one number corresponding to multiple terminals and the USSD service, thus this method enriches content of the service of one number corresponding to multiple terminals, and promotes improvement of the service of one number corresponding to multiple terminals.

The following embodiment takes the direct dialing service as an example.

On the assumption that a user A and a user B has subscribed the service of one number corresponding to multiple terminals in this embodiment, the respective terminal of the user A and the user B have different IMSIs, but have a same MSISDN.

A method for implementing the direct dialing service is provided to users having subscribed the service of one number corresponding to multiple terminals according to another embodiment of the present invention, and the method includes: if the terminal of user A calls the terminal of user B, user A may dial the MSISDN and the call sequence number of the terminal of user B. For example, the terminals of user A and user B have a same MSISDN 13928429666, the call sequence number of the terminal of the user A is 1, and the call sequence number of the terminal of the user B is 2.

The calling terminal dials the called party number which having subscribed the service of one number corresponding to multiple terminals, i.e., the terminal of user A calls the terminal of user B, the terminal of user A direct dials the number 139284296662, the last figure 2 represents the call sequence number of the terminal of the user B. An MSC/VLR sends a call routing request (SRI_REQ) to an HLR for requesting roaming number of the called party, the call routing request carries the MSISD (139284296662) and the call sequence number of the terminal of user B (2). After the HLR judges that the MSISDN of the direct dialing service belongs to the service of one number corresponding to multiple terminals according to the subscription information, the HLR determines which terminal would be connected in current process based on the call sequence number, and returns the roaming number of this terminal to the MSC/VLR through a call routing response message; the MSC/VLR receives the call routing response message, and connects this terminal according to the roaming number of this terminal.

Before determining which terminal would be connected in the current process, the HLR may obtain states of the related terminals through one or more PSI paging, and selects the terminal that have idle state to connect in the current process.

The above embodiment takes one subscribed terminal calling another subscribed terminal as an example, while in other cases one non-subscribed terminal may also call another subscribed terminal, and the latter has same method with the former.

As can be seen, the embodiment of the present invention provides a collaboration method which combines the service of one number corresponding to multiple terminals and the direct dialing service, thus this method enriches content of the service of one number corresponding to multiple terminals, and promotes improvement of the service of one number corresponding to multiple terminals.

The above mentioned introduce the method embodiments of the present invention, the embodiment of the present invention also provides a network device.

Figure 5 is a schematic architecture diagram of a network device according to an embodiment of the present invention.

As shown in Figure 5, the network device includes: a receiving unit 501 and a processing unit 502.

The receiving unit 501 is configured to receive a service request.

The service request may include: a call routing request, a short message routing request, a location request, or a USSD request and so on.

The processing unit 502 is configured to select a certain number of terminals from multiple subscribed terminals to implement continued service connection when a target number corresponding to the service request belongs to the service of one number corresponding to multiple terminals. The target number is carried in the service request, and refers to a number of service receiver, for example, the target number carried in the call routing request is a called party number. The numbers of the certain number of terminals selected from the multiple terminals may be one, and may also be greater than one while being smaller than the whole number of the multiple subscribed terminals.

The network device may be an HLR, and the processing unit 502 may include a judging unit 5021 and a selecting unit 5022.

The judging unit 5021 is configured to judge that the target number corresponding to the service request belongs to the service of one number corresponding to multiple terminals according to the subscription information.

The selecting unit 5022 is configured to determine the terminals corresponding to successful PSI paging through initiating the PSI paging to one or more terminals, i.e., determining the terminals that have successfully replied to the PSI paging, and select the certain number of terminals from the terminals which can get successful PSI paging to implement continued service connection.

The network device may implement continued service connection differently based on the different service request, and the implementing process specifically includes the following steps:

When the service request received by the receiving unit 501 is the call routing request, the processing unit 502 selects a terminal, obtains roaming number of this terminal for the call connection, and determines call sequence number of the terminal to be connected in a next process according to the selected terminal; or, the processing unit 502 selects the certain number of terminals, where the numbers of the certain number of terminals selected may be one and may also be greater than one while being smaller than the whole number of the multiple subscribed terminals, and the processing unit 502 implements the call connection according to roaming numbers of the certain number of terminals.

When the service request received by the receiving unit 501 is the short message routing request, the processing unit 502 selects another terminal to receive the short message after determining a predefined terminal being unavailable.

When the service request received by the receiving unit 501 is the location request, the processing unit 502 selects a terminal to be located.

When the service request received by the receiving unit 501 is the USSD request, the processing unit 502 selects a terminal as the objective of the USSD service.

When the service request received by the receiving unit 501 is the call routing request and the call routing request carries a call sequence number, the processing unit 502 selects a terminal corresponding to the call sequence number, and obtains roaming number of this terminal for the call connection.

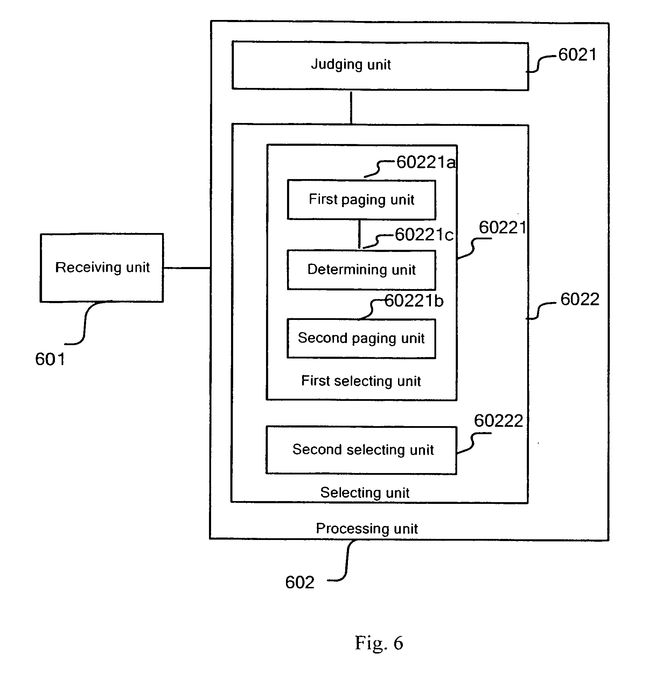

As shown in Figure 6, a schematic architecture diagram of the network device according to another embodiment of the present invention, the network device includes a receiving unit 601 and a processing unit 602, where the processing unit 602 includes a judging unit 6021 and a selecting unit 6022. These features are the same as that stated above in Figure 5, and the difference lies in that, the selecting unit 6022 may include the following units based on the method embodiments stated above in Figure 6: a first selecting unit 60221 or a second selecting unit 60222;

The receiving unit 601 is configured to receive a service request message;

The processing unit 602 is configured to select a certain number of terminals from multiple terminals to implement continued service connection when a target number corresponding to the service request message belongs to service of one number corresponding to the multiple terminals, wherein numbers of the certain number of terminals is equal to or greater than one but smaller than the total number of the multiple terminals;

The processing unit 602 includes the judging unit 6021 and the selecting unit 6022;

The judging unit 6021 is configured to judge the target number corresponding to the service request message belonging to the service of one number corresponding to multiple terminals based on subscription information;

The selecting unit 6022 includes a first selecting unit 60221 or a second selecting unit 60222;

The first selecting unit 60221 is configured to select the certain number of terminals that have successfully replied to provide subscriber information paging, PSI paging, by initiating the PSI paging toward all the multiple terminals or a part of the multiple terminals to implement continued service connection;

The second selecting unit 60222 is configured to select the certain number of terminals to implement continued service connection according to call sequence number carried in the service request message or recorded locally;

The first selecting unit 60221 includes a first paging unit 60221a, a second paging unit 60221b, or a determining unit 60221c;

The first paging unit 60221a is configured to initiate the PSI paging toward one terminal at a time until the PSI paging is successful, and select a first terminal that has successfully replied to the PSI paging;

The second paging unit 60221b is configured to initiate the PSI paging toward all the multiple terminals or a part of the multiple terminals at a time, determine terminals that have successfully replied to the PSI paging, and select the certain number of terminals from the terminals that have successfully replied to the PSI paging;

The determining unit 60221c is configured to determine a second terminal to be connected in next process, wherein a call sequence number of the second terminal is next to a call sequence number of the first terminal selected by the first paging unit 60221a.

As stated above, when the target number carried in the service request is a number subscribed the service of one number corresponding to multiple terminals, the network device selects the certain number of terminals to be connected, and thus: the embodiments of the present invention provide an optimized processing for the service of one number corresponding to multiple terminals, for the call service; the optimized processing can improve the put-through rate of the call, and avoid network resource wasting and connection duration delay, for the short message service; the optimized processing can avoid the situation that the short message cannot be sent successfully when the only predefined terminal is unreachable.

Furthermore, the embodiments of the present invention provide a collaboration method which combines the service of one number corresponding to multiple terminals and the US SD service or the direct dialing service, thus this method enriches content of the service of one number corresponding to multiple terminals, and promotes improvement of the service of one number corresponding to multiple terminals.

Such embodiments described above are exemplary embodiments about the method and network device for implementing communication service only, and shall not be regarded as limiting present invention in any ways. Those skilled in the art can make various modifications based on the idea of the present embodiments without departing from the scope of the present inventive concept, and thus those modifications are all covered by the scope as defined in the claims of the present invention.

## Claims

1. A method for implementing communication service, comprising:
receiving, by a Home Location Register , HLR, a service request from a Mobile Services switching Center, MSC ; and
judging, by the HLR, that a target number carried in the service request belongs to service of one number corresponding to multiple terminals, initiating provide subscriber information paging, PSI paging toward all the multiple terminals or a part of the multiple terminals, selecting a certain number of terminals that have successfully replied to the PSI paging, and returning roaming numbers of the selected certain number of terminals to the MSC, wherein numbers of the certain number of terminals are greater than one but smaller than the total number of the multiple terminals;
connecting, by the MSC, the certain number of terminals in turn in the Mobile Access Hunting, MAH, mode, or at the same time in the Flexible Alerting ,FA, mode.

2. The method according to the claim 1, wherein the initiating the PSI paging toward all the multiple terminals or a part of the multiple terminals comprises:
initiating, by the HLR, the PSI paging toward all the multiple terminals or a part of the multiple terminals according to a paging switch.

3. The method according to the claim 1, wherein after the MSC sends the service request, the MSC starts a waiting timer, the initiating the PSI paging toward all the multiple terminals or a part of the multiple terminals comprises:
controlling, by the HLR, numbers of times of the PSI paging toward all the multiple terminals or a part of the multiple terminals for avoiding the release of the MSC after the waiting timer times out.

4. The method according to the claim 1, wherein the initiating the PSI paging toward all the multiple terminals or a part of the multiple terminals comprises:
initiating, by the HLR, the PSI paging toward all the multiple terminals or a part of the multiple terminals at a time.

5. The method according to any one of claims 1 to 4, wherein
the service request is a short message routing request received by the HLR;
before the selecting the certain number of terminals, the method further comprises:
determining, by the HLR, a predefined terminal to be unreachable to receive a short message.

6. The method according to the claim 5, wherein the determining a predefined terminal to be unreachable to receive a short message comprises:
judging, by the HLR, whether a Mobile-Station-Not-Reachable-Flag of the predefined terminal is valid, and if yes, determining a predefined terminal to be unreachable to receive the short message.

7. The method according to the claim 6, the method further comprises:
receiving, by the HLR, a short message failing report from a Short Message Center, SMC, setting the Mobile-Station-Not-Reachable-Flag on the predefined terminal, monitoring the state of the predefined terminal, and modifying the Flag to be invalid if the predefined terminal is turned on.

8. A network device for implementing communication service, comprising:
a receiving unit(501), configured to receive a service request from a Mobile Services switching Center, MSC; and
a processing unit(502), configured to judge that a target number carried in the service request belongs to service of one number corresponding to multiple terminals, initiate provide subscriber information paging, PSI paging toward all the multiple terminals or a part of the multiple terminals, select a certain number of terminals that have successfully replied to the PSI paging, and returning roaming numbers of the selected certain number of terminals to the MSC, wherein numbers of the certain number of terminals is greater than one but smaller than the total number of the multiple terminals.

9. The network device according to the claim 8, wherein the processing unit comprises a second paging unit, and wherein:
the second paging unit is configured to initiate the PSI paging toward all the multiple terminals or a part of the multiple terminals at a time, determine terminals that have successfully replied to the PSI paging, and select the certain number of terminals from the terminals that have successfully replied to the PSI paging.

10. The network device according to the claim 8, wherein the service request is a short message routing request, the processing unit further comprises:
means for determining a predefined terminal to be unreachable to receive a short message.

## Patentansprüche

1. Verfahren zum Implementieren eines Kommunikationsdiensts, das Folgendes umfasst:
Empfangen durch ein Heimatortsregister, HLR, einer Dienstanforderung von einer Mobildienst-Vermittlungszentrale, MSC; und
Beurteilen durch das HLR, dass eine Sollanzahl, die in der Dienstanforderung transportiert wird, zu der Bedienung einer Anzahl gehört, die mehreren Endgeräten entspricht, Initialisieren eines Teilnehmerinformationsbereitstellungs-Pagings, PSI-Pagings, zu allen der mehreren Endgeräte oder zu einem Teil der mehreren Endgeräte, Auswählen einer bestimmten Anzahl von Endgeräten, die erfolgreich auf das PSI-Paging geantwortet haben, und Zurückleiten von Roaming-Anzahlen der ausgewählten bestimmten Anzahl von Endgeräten zu der MSC, wobei Anzahlen der bestimmten Anzahl von Endgeräten größer als eins, jedoch kleiner als die Gesamtanzahl der mehreren Endgeräte sind;
Verbinden durch die MSC der bestimmten Anzahl von Endgeräten ihrerseits in der Mobilzugriffsjagd-Betriebsart, MAH-Betriebsart, oder gleichzeitig in der Betriebsart mit flexibler Warnung, FA-Betriebsart.

2. Verfahren nach Anspruch 1, wobei das Initialisieren des PSI-Pagings zu allen der mehreren Endgeräte oder zu einem Teil der mehreren Endgeräte Folgendes umfasst:
Initialisieren durch das HLR des PSI-Pagings zu allen der mehreren Endgeräte oder zu einem Teil der mehreren Endgeräte in Übereinstimmung mit einer Paging-Vermittlung.

3. Verfahren nach Anspruch 1, wobei, nachdem die MSC die Dienstanforderung gesendet hat, die MSC einen Wartezeitgeber startet, wobei das Initialisieren des PSI-Pagings zu allen der mehreren Endgeräte oder zu einem Teil der mehreren Endgeräte Folgendes umfasst:
Steuern durch das HLR der Anzahl des PSI-Pagings zu allen der mehreren Endgeräte oder zu einem Teil der mehreren Endgeräte, um die Freigabe der MSC nach dem Ablauf des Wartezeitgebers zu vermeiden.

4. Verfahren nach Anspruch 1, wobei das Initialisieren des PSI-Pagings zu allen der mehreren Endgeräte oder zu einem Teil der mehreren Endgeräte Folgendes umfasst:
gleichzeitiges Initialisieren durch das HLR des PSI-Pagings zu allen der mehreren Endgeräte oder zu einem Teil der mehreren Endgeräte.

5. Verfahren nach einem der Ansprüche 1 bis 4, wobei
die Dienstanforderung eine Kurznachrichten-Lenkungsanforderung ist, die von dem HLR empfangen wird;
wobei das Verfahren vor dem Auswählen der bestimmten Anzahl von Endgeräten Folgendes umfasst:
Bestimmen durch das HLR, dass ein im Voraus definiertes Endgerät nicht erreichbar ist, um eine Kurznachricht zu empfangen.

6. Verfahren nach Anspruch 5, wobei das Bestimmen, dass ein im Voraus definiertes Endgerät nicht erreichbar ist, um eine Kurznachricht zu empfangen, Folgendes umfasst:
Beurteilen durch das HLR, ob ein Mobilstation-nicht-erreichbar-Flag des im Voraus definierten Endgeräts gültig ist und wenn ja, Bestimmen, dass ein im Voraus definiertes Endgerät nicht erreichbar ist, um die Kurznachricht zu empfangen.

7. Verfahren nach Anspruch 6, wobei das Verfahren ferner Folgendes umfasst:
Empfangen durch das HLR eines Kurznachrichten-Fehlerberichts von einer Kurznachrichtenzentrale, SMC, Setzen des Mobilstation-nicht-erreichbar-Flags in dem im Voraus definierten Endgerät, Überwachen des Zustands des im Voraus definierten Endgeräts und Modifizieren des Flags, damit es ungültig ist, falls das im Voraus definierte Endgerät eingeschaltet wird.

8. Netzvorrichtung zum Implementieren eines Kommunikationsdiensts, die Folgendes umfasst:
eine Empfangseinheit (501), die konfiguriert ist, eine Dienstanforderung von einer Mobildienst-Vermittlungszentrale, MSC, zu empfangen; und
eine Verarbeitungseinheit (502), die konfiguriert ist, zu beurteilen, dass eine in der Dienstanforderung transportierte Sollanzahl zu der Bedienung einer Anzahl gehört, die mehreren Endgeräten entspricht, ein Teilnehmerinformationsbereitstellungs-Paging, PSI-Paging, zu allen der mehreren Endgeräte oder zu einem Teil der mehreren Endgeräte zu initialisieren, eine bestimmte Anzahl von Endgeräten auszuwählen, die erfolgreich auf das PSI-Paging geantwortet haben, und Roaming-Anzahlen der ausgewählten bestimmten Anzahl von Endgeräten zu der MSC zurückzuleiten, wobei Anzahlen der bestimmten Anzahl von Endgeräten größer als eins, jedoch kleiner als die Gesamtanzahl der mehreren Endgeräte ist.

9. Netzvorrichtung nach Anspruch 8, wobei die Verarbeitungseinheit eine zweite Paging-Einheit umfasst und wobei:
die zweite Paging-Einheit konfiguriert ist, das PSI-Paging zu allen der mehreren Endgeräte oder zu einem Teil der mehreren Endgeräte gleichzeitig zu initialisieren, Endgeräte zu bestimmen, die erfolgreich auf das PSI-Paging geantwortet haben, und die bestimmte Anzahl von Endgeräten aus den Endgeräten auszuwählen, die erfolgreich auf das PSI-Paging geantwortet haben.

10. Netzvorrichtung nach Anspruch 8, wobei die Dienstanforderung eine Kurznachrichten-Lenkungsanforderung ist und wobei die Verarbeitungseinheit ferner Folgendes umfasst:
Mittel, um zu bestimmen, dass ein im Voraus definiertes Endgerät nicht erreichbar ist, um eine Kurznachricht zu empfangen.

## Revendications

1. Procédé de mise en oeuvre d'un service de communication, comprenant :
la réception, par un Enregistreur de Position de Rattachement, HLR, d'une requête de service depuis un Centre de Commutation de Services Mobiles, MSC ; et
le jugement, par le HLR, qu'un numéro cible inclus dans la requête de service se rapporte au service d'un numéro unique correspondant à de multiples terminaux, le lancement d'une recherche pour la fourniture d'informations d'abonné ou recherche PSI vers la totalité ou une partie des multiples terminaux, la sélection d'un certain nombre de terminaux qui ont correctement répondu à la recherche PSI, et le renvoi de numéros d'itinérance du certain nombre sélectionné de terminaux au MSC, les nombres du certain nombre de terminaux étant supérieurs à un mais inférieurs au nombre total des multiples terminaux ;
la connexion, par le MSC, du certain nombre de terminaux l'un après l'autre dans le mode Recherche de Lignes d'Accès Mobile, MAH, ou simultanément dans le mode Alerte Souple, FA.

2. Procédé selon la revendication 1, dans lequel le lancement de la recherche PSI vers la totalité ou une partie des multiples terminaux comprend :
le lancement, par le HLR, de la recherche PSI vers la totalité ou une partie des multiples terminaux en fonction d'une commutation de recherche.

3. Procédé selon la revendication 1, dans lequel après l'envoi par le MSC de la requête de service, le MSC lance une temporisation d'attente, et le lancement de la recherche PSI vers la totalité ou une partie des multiples terminaux comprend :
le contrôle, par le HLR, du nombre de fois que la recherche PSI est effectuée vers la totalité ou une partie des multiples terminaux pour éviter la libération du MSC à l'expiration de la temporisation d'attente.

4. Procédé selon la revendication 1, dans lequel le lancement de la recherche PSI vers la totalité ou une partie des multiples terminaux comprend :
le lancement, par le HLR, de la recherche PSI vers la totalité ou une partie des multiples terminaux en une fois.

5. Procédé selon l'une quelconque des revendications 1 à 4, dans lequel :
la requête de service est une requête de routage de message court reçue par le HLR ;
avant la sélection du certain nombre de terminaux, le procédé comprend en outre :
la détermination, par le HLR, d'un terminal prédéfini comme n'étant pas joignable pour recevoir un message court.

6. Procédé selon la revendication 5, dans lequel la détermination d'un terminal prédéfini comme n'étant pas joignable pour recevoir un message court comprend :
le jugement, par le HLR, qu'un Fanion de Station Mobile Non Joignable du terminal prédéfini est valable ou non, et dans l'affirmative, la détermination d'un terminal prédéfini comme étant non joignable pour recevoir le message court.

7. Procédé selon la revendication 6, comprenant en outre :
la réception, par le HLR, d'un rapport d'échec de message court depuis un Centre de Messages Courts, SMC, le réglage du Fanion de Station Mobile Non Joignable sur le terminal prédéfini, le contrôle de l'état du terminal prédéfini, et la modification du Fanion pour le rendre non valable si le terminal prédéfini est allumé.

8. Dispositif de réseau pour la mise en oeuvre d'un service de communication, comprenant :
une unité de réception (501), configurée pour recevoir une requête de service depuis un Centre de Commutation de Services Mobiles, MSC ; et
une unité de traitement (502), configurée pour juger qu'un numéro cible inclus dans la requête de service se rapporte au service d'un numéro unique correspondant à de multiples terminaux, lancer une recherche pour la fourniture d'informations d'abonné ou recherche PSI vers la totalité ou une partie des multiples terminaux, sélectionner un certain nombre de terminaux qui ont correctement répondu à la recherche PSI, et renvoyer des numéros d'itinérance du certain nombre sélectionné de terminaux au MSC, les nombres du certain nombre de terminaux étant supérieurs à un mais inférieurs au nombre total des multiples terminaux.

9. Dispositif de réseau selon la revendication 8, dans lequel l'unité de traitement comprend une seconde unité de recherche, et dans lequel :
la seconde unité de recherche est configurée pour lancer la recherche PSI vers la totalité ou une partie des multiples terminaux en une fois, déterminer les terminaux qui ont correctement répondu à la recherche PSI, et sélectionner le certain nombre de terminaux parmi les terminaux qui ont correctement répondu à la recherche PSI.

10. Dispositif de réseau selon la revendication 8, dans lequel la requête de service est une requête de routage de message court, l'unité de traitement comprenant en outre :
un moyen de détermination d'un terminal prédéfini comme étant non joignable pour recevoir un message court.
